# EUROPEAN PATENT APPLICATION

(11) **EP 4 764 896 A1**
(43) Date of publication of application: **24.06.2026**
(21) Application number: 24386148.1
(22) Date of filing: 20.12.2024
(51) Int. Cl.: G06F 16/901, G06F 16/9032

(54) **SEMANTIC SEARCH FOR RETRIEVAL-AUGMENTED GENERATION**

(71) Applicant: Microsoft Technology Licensing, LLC, Redmond, WA 98052 (US)
(72) Inventor: ANTONOPOULOS, Panagiotis, Redmond, WA 98052 (US); VIJAYRAGHAVAN, Arun, Redmond, WA 98052 (US)
(74) Representative: CMS Cameron McKenna Nabarro Olswang LLP

(57) **Abstract**

Methods, apparatuses, and products for semantic search for retrieval-augmented generation, including: generating a semantic index for a table in response to a command to generate the semantic index for the table, including: generating a vector embedding of data in a corresponding first column; generating a vector index based on the vector embedding of the data in the corresponding first column; and generating a full-text index of a corresponding second column, wherein the semantic index comprises the vector index of each column of the one or more first columns and the full-text index of each column of the one or more second columns; and performing a semantic search of at least one column of the table indexed by the semantic index by applying a search string to the semantic index, wherein the search string corresponds to a query to a language model (LM).

## Description

### BACKGROUND

Generative artificial intelligence (AI) models such as large language models (LLM) may be used to process natural language queries to perform various tasks such as generating content, gathering or summarizing information, answering questions, and the like. To do so, these models are trained using large knowledge bases of training data. Over time, the knowledge base used to train a model may lack more up-to-date or relevant information, potentially hindering the ability of the model to provide relevant and accurate output.

Though these models can be retrained or fine-tuned using an updated knowledge base, these processes are resource intensive, requiring significant amounts of computational resources and financial costs. To address this, retrieval-augmented generation (RAG) may be used to supplement the knowledge base used to train the model. RAG uses the query to access data from various data sources relevant to the query. This accessed data is then provided to the query as an additional input with the query to be processed, providing additional context to the model when processing the request.

Enabling RAG for a data set may be a complex and labor-intensive process, requiring users to perform many steps in order to allow a data set to be accessed for RAG. For example, databases must be created and configured, data sets may need to be processed and indexed, queries for accessing and potentially fusing data must be designed, and the like. This presents multiple opportunities for user error, requires significant amounts of user time and resources, and may be computationally and resource inefficient.

### SUMMARY

According to embodiments of the present disclosure, various methods, apparatus, and products for semantic search for retrieval-augmented generation are described herein. In some aspects, semantic search for retrieval-augmented generation includes: generating a semantic index for a table in response to a command to generate the semantic index for the table, wherein generating the semantic index comprises: generating, for each column of one or more first columns of the table, a vector embedding of data in a corresponding first column; generating, for each column of the one or more first columns, a vector index based on the vector embedding of the data in the corresponding first column; and generating, for each column of one or more second columns of the table, a full-text index of a corresponding second column, wherein the semantic index comprises the vector index of each column of the one or more first columns and the full-text index of each column of the one or more second columns; and performing a semantic search of at least one column of the table indexed by the semantic index by applying a search string to the semantic index, wherein the search string corresponds to a query to a large language model (LLM). In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 sets forth a diagram of an example system for retrieval-augmented generation in accordance with some embodiments.
Fig. 2 sets forth a flow chart illustrating an example method of semantic search for retrieval-augmented generation in accordance with some embodiments.
Fig. 3 sets forth a flow chart illustrating an additional example method of semantic search for retrieval-augmented generation in accordance with some embodiments.
Fig. 4 sets forth a flow chart illustrating an additional example method of semantic search for retrieval-augmented generation in accordance with some embodiments.
Fig. 5 sets forth a flow chart illustrating an additional example method of semantic search for retrieval-augmented generation in accordance with some embodiments.
Fig. 6 sets forth a flow chart illustrating an additional example method of semantic search for retrieval-augmented generation in accordance with some embodiments.
Fig. 7 sets forth a flow chart illustrating an additional example method of semantic search for retrieval-augmented generation in accordance with some embodiments.
Fig. 8 sets forth a flow chart illustrating an additional example method of semantic search for retrieval-augmented generation in accordance with some embodiments.
Fig. 9 sets forth a flow chart illustrating an additional example method of semantic search for retrieval-augmented generation in accordance with some embodiments.
Fig. 10 illustrates an exemplary computing device that may be specifically configured to perform one or more of the processes described in the present disclosure.
Fig. 11 sets forth a block diagram of a cloud service provider service architecture in accordance with some embodiments.

### DESCRIPTION OF EMBODIMENTS

Machine learning models, including generative AI models such as large language models (LLMs), are trained using some initial knowledge base. Sometimes this initial knowledge base may not include the most up-to-date or the most relevant information for a particular request, making it difficult for the machine learning model to accurately or correctly respond to this request. Retraining or fine-tuning the machine learning model using additional information beyond this initial knowledge base may allow the machine learning model to better respond to some requests. However, both retraining and fine-tuning of models require significant amounts of time and financial costs.

Retrieval-augmented generation (RAG) may be used to supplement this initial knowledge base by accessing data from various sources and providing the accessed data to the machine learning model when prompting the machine learning model with a request. This accessed data may be used to provide additional context to the machine learning model that is useful in processing requests. For example, this accessed data may be used to focus or ground the machine learning model on a particular area of knowledge. As another example, this accessed data may be used to provide the machine learning model with data that is more recent or relevant to a particular request compared to the initial knowledge base. Thus, the machine learning model can take this accessed data into consideration when processing requests without expensive training or fine-tuning.

Existing implementations for RAG require multiple steps to prepare data so that it can be accessible for use by a machine learning model. For example, the data may need to be divided into chunks and converted into a vector embedding, tables may need to be created for storing chunks and/or vector embeddings, indexes may need to be created, and so forth. Each of these steps may require a developer of an AI framework to perform multiple tasks, causing the overall process for allowing the data to be accessible for RAG to be complicated and time-consuming. This may discourage adoption of RAG in the AI framework, resulting in a model producing potentially less-useful results, and may require significant time and costs due to the required manpower involved.

To address these shortcomings, the approaches set forth herein allow for automatic creation of the requisite underlying data and structures for RAG. Such approaches can include, for example, one or more relational database statements that may specify particular columns of a table to be searchable, the particular types of searches that may be used for each column, approaches to use for creating data chunks and vector embeddings, and potentially other relevant parameters. When executed, such relational database statements can create a "semantic index" for each column that may include a vector index for vector-based searching, a full-text index for keyword-based searching, or both. In some embodiments, the vector index and full-text index can be created over a single pass of the underlying data, saving time and costs over approaches requiring individual passes for each index. The semantic index for a column can be searched using a "semantic search" that applies a search string to the vector index and/or full-text index of the semantic index.

Engineers involved in software development are costly, making effective use of their time essential. By enabling RAG using one or more relational database statements, this reduces the overall amount of development time required to enable RAG in an AI platform, saving on associated costs. Moreover, simplifying approaches for enabling and using RAG in an AI platform though relational database statements may improve adoption rates for the underlying database technology, increasing revenue. Additionally, the approaches set forth herein allow for indexes to be generated more efficiently and require less storage space than existing implementations, saving costs and improving overall performance.

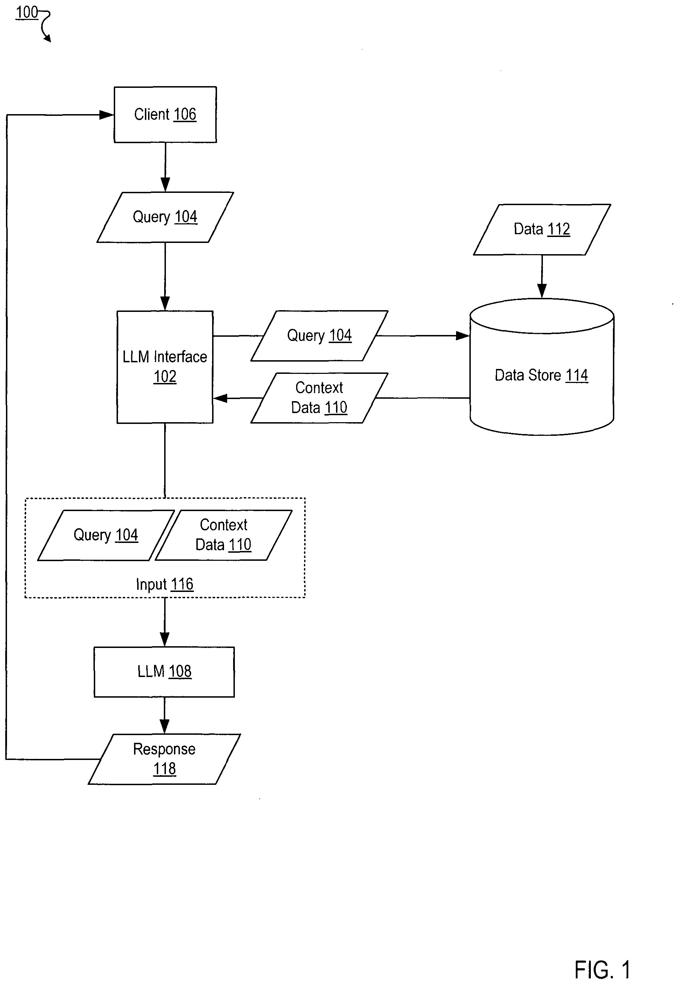

Fig. 1 sets forth an example system 100 for retrieval-augmented generation in accordance with some embodiments. The example system 100 of Fig. 1 includes a large language model (LLM) interface 102. The LLM interface 102 is an interface for accepting queries 104 from a client 106 to be provided to an LLM 108. Although the following discussion is presented in the context of an LLM, readers will appreciate that the approaches set forth herein may also be applied to other types of generative artificial intelligence (Al) models, machine learning models, and the like.

As referred to herein, generative AI uses models such as neural networks, including language models (LMs) such as large language models (LLMs), small language models (SLMs), multimodal large language models (MLMMs), and the like to generate content, such as text, code, graphics, animations, video, audiovisual representations, audio, speech, etc., in response to prompts. The generative AI models are trained using a corpus of training data content to learn the patterns and structure of that content. The generative AI model may then generate new content having the characteristics learned from the training data. Prompts may include text, code, audio, graphic, video, and representations in any other media. Such prompts may be provided to the generative AI model as a natural language input. For example, the approaches set forth herein may interact with a generative AI model using predefined prompts, dynamically generated prompts, prompts that include some portion of dynamically generated content (e.g., through the use of templates and dynamically populated variables), and the like.

The query 104 may include a natural language input for processing by the LLM 108. For example, the query 104 may include a natural language input requesting that some content be generated, requesting answers to some question, and the like. The LLM interface 102 may include any type of system interface such as an application program interface (API), a graphical user interface (GUI), a command line interface (CLI), or another type of interface as can be appreciated. The LLM interface 102 performs retrieval-augmented generation (RAG) in order to provide the LLM 108 with additional contextual information related to the query 104, shown as context data 110. The context data 110 may include data outside of the training data used to train the LLM 108 so as to provide the LLM 108 with additional or more up-to-date information than was used to initially train the LLM 108, thereby improving the relevance and accuracy of the LLM 108 output.

The context data 110 includes portions of data 112, or derivatives thereof, stored in a data store 114. As will be described in further detail below, data 112 may be transformed, ingested, indexed, and/or otherwise processed for storage in the data store 114. The LLM interface 102 uses the query 104 to request context data 110 related to the query 104 from the data store 114. For example, in some embodiments, the LLM interface 102 may generate an embedding (e.g., a vector embedding) based on the query 104 and provide that embedding to the data store 114, with the context data 110 being returned in response to the embedding.

The LLM interface 102 then provides the query 104 and the context data 110 as an input 116 to the LLM 108. For example, in some embodiments, the LLM interface 102 may provide the query 104 and the context data 110 as part of a prompt to the LLM 108. In such embodiments, the prompt may include additional information for the LLM to facilitate processing of the query 104, such as additional information included in or inserted into a prompt template. The LLM 108 processes the query 104 using the context data 110 and generates, as a response 118, some output. This response 118 is then returned to the client 108.

As is set forth above, data 112 may be ingested or otherwise processed for storage in the data store 114 so as to transform the data 112 into a form or format that can be queried for use as context data 110 for RAG, particularly for unstructured data such as text data (e.g., documents or other text data as can be appreciated). In some embodiments, this may include generating a vector embedding of the text data. A vector embedding is a conversion of some data (e.g., text data or other data) into a vector of numerical values. A vector embedding may be generated for some portion of data by providing the portion of data as input to an embedding model, a trained model that provides vector embeddings as output based on some input. By converting text data into a vector embedding, the text data and the corresponding vector embedding may be stored in a vector database that may be queried, thereby allowing for context data 110 to be accessed from the vector database. A query 104 may be converted into a vector embedding and the context data 110 may be selected from a vector database using the vector embedding of the query 104. For example, context data 110 may be selected as data whose vector embeddings are nearest to the vector embedding of the query 104 based on some distance function. This approach for searching the data store 114 is hereinafter referred to as a "vector search."

In some embodiments, a vector database may store vectors of a fixed size. Where the text data is so large that its vector embedding is larger than the fixed size used by the vector database, the text data may be divided into smaller segments called "chunks" by applying a chunking algorithm. Various approaches (e.g., chunking algorithms) may be used when generating chunks from text data. For example, text data may be divided into chunks of a fixed size, divided based on different components of text data such as sentences, paragraphs or chapters, or otherwise divided. In some embodiments, chunks may be generated to have some amount of overlap with preceding and/or subsequent chunks. Vector embeddings may be generated for each of these chunks, with the chunks and corresponding vector embeddings being stored in the vector database. These chunks may then be queried as described above for inclusion in the context data.

In some embodiments, the data store 114 may also store unstructured data in unstructured form. For example, each portion of unstructured data may be stored as a record in a relational database or other data structure as can be appreciated. For unstructured text data, this may allow for unstructured text data to be queried for inclusion in context data 110 by searching the content of unstructured text data using keywords or phrases included in the query 104. This approach for searching the data store 114 is hereinafter referred to as a "full-text search."

In some embodiments, the data store 114 may implement indexes to facilitate vector searches and/or full-text searches. For example, a vector index may serve as an index of a table of a vector database. As another example, a full-text index may serve as an index of a table of a relational database storing records of text data. In some embodiments, unstructured text data may be searchable using both vector searches and full-text searches. For example, in some embodiments, a given portion of unstructured text data may be stored as a record of text data in a relational database for full-text search. That portion of unstructured text data may also be chunked and have the chunks and their corresponding vector embeddings stored in a vector database for vector search. In some embodiments, the context data 110 may be based on a combination of a vector search and a full-text search of similar or identical data sets. In such embodiments, the context data 110 may be based on fusion or merger of the results of the vector search and the full-text search.

In order to enable RAG for some data set, some existing implementations require significant amounts of user action and manual configuration. For example, assume an unstructured text data set stored in the data store 114 as records in a relational database. In order to enable combined vector and full-text searching of this data set, a user may be required to manually create tables in a vector database for storing vector embeddings and corresponding chunks, create indexes for the vector database and, if not already present, the relational database, create and store the chunks and vector embeddings in the vector database, and the like. In order to search the data set in the data store 114, the user may need to configure the LLM interface 102 and/or the data store 112 to perform various tasks such as generating of vector embeddings for input queries 104, performing separate vector and full-text searches, merging those search results, ranking the merged results, and providing the context data 110 based on the merged results. In these implementations, a user must perform multiple, separate actions to both prepare the data set for search and to configure the LLM interface 102 and/or the data store 112 to issue the respective searches, process results, and the like. This results in significant time and resource burden on the user, presenting more opportunities for user error, and, as will be described in further detail below, is resource inefficient in many respects.

In contrast, the approaches set forth herein for semantic search for retrieval-augmented generation allow for creation of a semantic index for one or more columns of a table storing records of structured, unstructured, and/or semi-structured text data. The semantic index may include, for a given column, a full-text index, a vector index, or both. The semantic index may be created using a single command such as a single relational database statement with predicates describing, for each column, the type of search or searches that should be supported for a given column. The requisite index generation, data transformations, and the like are then automatically performed by processing this single command. Any of these one or more columns may then be searched using another command such as another relational database statement. This command may include a semantic search predicate that includes a search string to be applied to a particular column. A semantic search of that column may then be performed as a full-text search, a vector search, or a hybrid search (e.g., a combination of a full-text search and a vector search) depending on the particular type of search(es) supported by the given column as defined when creating the semantic index, eliminating the need to particularly indicate what type of search should be performed in the semantic search predicate. Processing of this other command causes the search(es), any requisite result fusion, ranking, and the like to be automatically performed, thereby allowing for RAG searching of the data set using a single command (e.g., a single relational database statement). Moreover, the approaches set forth herein provide for storage and computational resource efficiencies over the existing implementations described above.

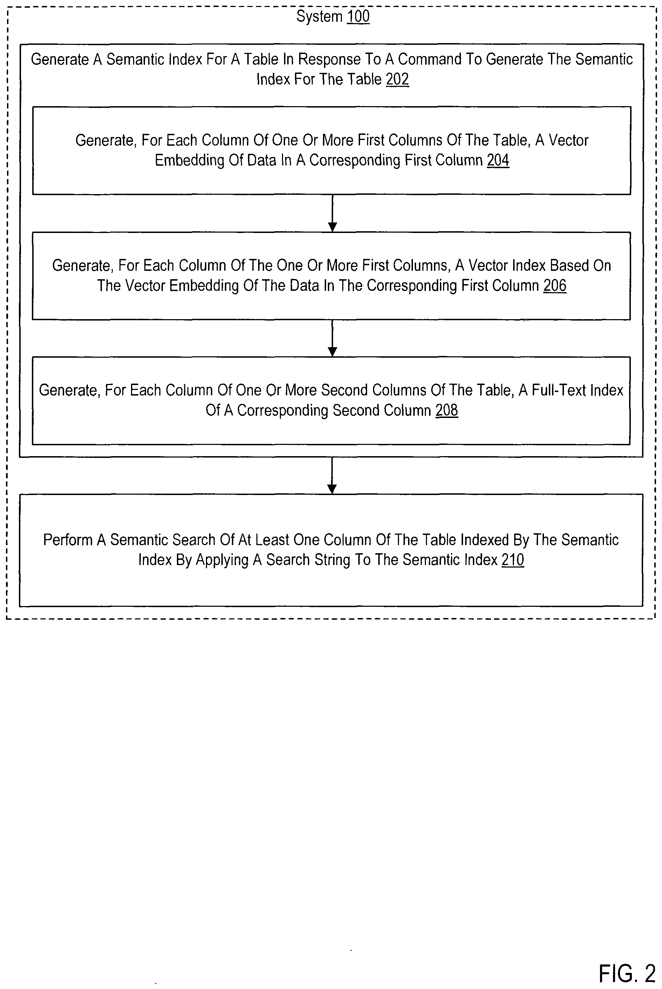

For further explanation, Fig. 2 sets forth a flowchart of an example method of semantic search for retrieval-augmented generation in accordance with some embodiments of the present disclosure. The method of Fig. 2 may be performed, for example, in a system 100 of Fig. 1 or in another computing system or computing environment as can be appreciated. The method of Fig. 2 includes generating 202 a semantic index for a table in response to a command to generate the semantic index for the table. The semantic index for the table is an index that facilitates searching one or more columns using a semantic search, to be described in further detail below. The semantic index may include, for a given column, a vector index for the given column, a full-text index for the given column, or both. For example, in some embodiments, the command to generate the semantic index may indicate one or more columns of the table to be indexed by the semantic index (e.g., one or more columns for which semantic searching will be enabled). In this example, in some embodiments, the command to generate the semantic index may indicate, for each listed column to be searchable, a type of search to be supported for a given column, including a vector search, a full-text search, or a hybrid search that combines a vector search and a full-text search. Accordingly, the semantic index may include, for a given column, only a vector index where the given column supports a vector search, only a full-text index where the given column supports a full-text search, and both a vector index and a full-text index where the given column supports a hybrid search.

In the example method of Fig. 2, the semantic index for the one or more columns includes, for each of the one or more columns, both a vector index and a full-text index for the corresponding column. Accordingly, in some embodiments, generating 202 a semantic index for a table in response to a command to generate the semantic index for the table includes generating 204, for each column of one or more first columns of the table, a vector embedding of data in a corresponding first column. The one or more first columns may include those columns indicated in the command to generate the semantic index to support a vector search or a hybrid search. Assume that the table includes multiple records storing data such as unstructured text data. The data in a given column may therefore include the data stored as a value for a record of the table in that given column.

A vector embedding of data is a representation or conversion of the data into a multidimensional vector of numerical values. In other words, generating 204 a vector embedding of data includes mapping that data into a multidimensional space. In some embodiments, generating 204 a vector embedding of data includes providing the data as input to an embedding model that provides, as output, a vector embedding. For example, an embedding model may include a trained model or another type of model as can be appreciated.

In some embodiments, the generated vector embeddings may be stored in a vector database, such as in a table of a vector database. In some embodiments, the table of the vector database may include an internal table of the vector database. For example, each record or entry in the table of the vector database may associate a vector embedding with the data used to generate that vector embedding. In some embodiments, the table and/or the vector database may store vectors of a fixed size (e.g., a fixed number of dimensions). In some embodiments, a given portion of data in a given column may be so large that the resulting vector embedding has more dimensions than the fixed size of the vector database. Accordingly, as will be described in further detail below, this portion of data may be subdivided into multiple chunks with a vector embedding generated for each chunk. Thus, vector embeddings for each chunk may be stored as separate records into the vector database.

In some embodiments, where the command to generate the semantic index indicates multiple first columns to support vector or hybrid search, each of these multiple first columns may have a corresponding vector database table into which their respective vector embeddings are stored. In some embodiments, where the vector database does not include a table for storing the vector embeddings of the data of a particular column, a table may be automatically created in the vector database.

In some embodiments, generating 202 a semantic index for a table in response to a command to generate the semantic index for the table also includes generating 206, for each column of the one or more first columns, a vector index based on the vector embedding of the data in the corresponding first column. Here, the vector index of a given column is a subcomponent of the overall semantic index that enables searching of the given column using a vector search. In other words, generating 206, for each column of the one or more first columns, a vector index based on the vector embedding of the data in the corresponding first column includes generating vector indexing data for each of the one or more first columns for inclusion in the semantic index. Readers will appreciate that this vector indexing information corresponds to the vector embeddings as stored in a vector database. Put differently, the vector indexing information references entries in the vector database. Accordingly, a search (e.g., a vector or hybrid search) directed to any of the one or more first columns of the table (e.g., the non-vector database table) will cause a search of the vector database using the generated 206 vector indexes. Generating 206, for each column of the one or more first columns, a vector index based on the vector embedding of the data in the corresponding first column may be performed using any approach for generating vector indexing information as can be appreciated.

In some embodiments, generating 202 a semantic index for a table in response to a command to generate the semantic index for the table also includes generating 208, for each column of one or more second columns of the table, a full-text index of a corresponding second column. The one or more second columns may include those columns indicated in the command to generate the semantic index to support a full-text search or a hybrid search. Accordingly, in some embodiments, the one or more first columns and the one or more second columns may at least partially overlap where one or more columns are indicated to support a hybrid search. Here, the full-text index of a given column is a subcomponent of the overall semantic index that enables searching of the given column using a full-text search. In other words, generating 208, for each column of one or more second columns of the table, a full-text index of a corresponding second column includes generating full-text indexing data for each of the one or more second columns for inclusion in the semantic index. As is set forth above, a full-text search is a search of a body of text (e.g., the data of a particular column) based on keywords, phrases, and the like. Generating 208, for each column of one or more second columns of the table, a full-text index of a corresponding second column may be performed using any approach for generating full-text indexing information as can be appreciated.

In some existing implementations, in order to enable both vector searching and full-text searching of a data set, a vector index and a full-text index must be generated using separate, independently functioning operations. In other words, the data set may be iterated though or enumerated once to generate the vector index and once again to generate the full-text index. This is computationally inefficient as it requires multiple accesses to the same data. Accordingly, in some embodiments, generating 202 the semantic index for the table may be performed using a single pass over the table (e.g., over the one or more first columns of the table and the one or more second columns of the table). For example, in some embodiments, a data set may include indexed data by virtue of including either the contents of the table as a whole or a subset of selected first and second columns. Each record of this data set may be iterated through or enumerated and the appropriate vector embeddings, vector indexing information, and/or full-text indexing information generated for a given record. Thus, the semantic index may be generated using a single pass over the indexed data, using less computational resources than if performing multiple passes to separately generate full-text indexes and vector indexes.

As is set forth above, the semantic index may be generated in response to a command to generate a semantic index for the table. In some embodiments, this command may include a relational database statement (e.g., a Structured Query Language (SQL) statement or other relational database statement as can be appreciated) that, when issued, causes the semantic index to be created. In some embodiments, this command may include various parameters indicating how the semantic index should be generated. In some embodiments, where the command includes a relational database statement, these parameters may be encoded as predicates, operands, or clauses of the relational database statement. As an illustrative example, consider the following syntax template for a relational database statement to generate a semantic index:

```
CREATE SEMANTIC INDEX index_name
 ON <object_name>
 [(column_name
      [SEARCH_TYPE = {vector | full-text | hybrid}]
      [, CHUNK_USING (TYPE = {fixed | sentence | paragraph | chapter} [, SIZE =
      <character_count_per_chunk>)][, OVERLAP = <character_overlap_count>])]
 [,...n])]
```

In this example syntax template, "index_name" is a parameter for the name of the semantic index as stored. "<object_name>" is a placeholder for the table for which the semantic index will be generated. The example syntax template then includes a placeholder for a listing of one or more columns to be indexed in the semantic index. "column_name" is a parameter for a column to be indexed. SEARCH_TYPE defines whether the column can be searched using a vector search, a full-text search, or a hybrid search. CHUNK USING indicates a chunking approach to be applied to the data of that column (e.g., fixed size, sentence-based chunks, paragraph-based chunks, or chapter-based chunks). SIZE is an optional parameter for fixed-size chunking indicating the size of each chunk. OVERLAP is an optional parameter for a number of characters that may overlap across chunks.

Readers will appreciate that the example syntax template is merely illustrative and that a 20 variety of syntaxes or formats may be used in the command to generate the semantic index. Moreover, readers will appreciate that additional information may be defined in the command to create the semantic index. As an example, the command to create the semantic index may indicate a particular embedding model to use for vector embeddings, parameters for that model, a type of distance to be used when comparing vector embeddings (e.g., cosine, dot, or Euclidean), and other parameters as can be appreciated.

In some embodiments, the command to generate the semantic index for the table may omit some values or parameters. Accordingly, in some embodiments, generating 202 the semantic index for the table may be performed using various default parameters or values. As an 30 example, in some embodiments, the command to generate the semantic index for the table may omit, for a particular column, a type of search to be supported by the semantic index. Accordingly, in such embodiments, the semantic index may be generated to support a default type of search for that column, such as hybrid search. As a further example, default values or parameters may be used, where omitted, for a chunking approach to be used, a vector distance calculation method, an embedding model to be used, and the like.

The method of Fig. 2 also includes performing 210 a semantic search of at least one column of the table indexed by the semantic index by applying a search string to the semantic index. In some embodiments, the search string corresponds to a query to a large language model. Accordingly, the results of the semantic search may be used as additional contextual information for RAG that may be provided to the LLM with the query. In some embodiments, performing 210 the semantic search may include performing 210 the semantic search in response to a semantic search command that includes the search string. In some embodiments, the semantic search command may include a relational database statement targeting the table. For example, in some embodiments, the semantic search command may include a predicate of a relational database statement targeting the table, and potentially other tables. Thus, the semantic search may be used to select some data that may potentially be included with other data as part of a relational database statement targeting multiple tables. In some embodiments, the semantic search command may indicate the at least one column to be searched.

Applying the search string to the semantic index includes applying the search string to the at least one column (e.g., the at least one column identified in the semantic search command). Applying the search string to a particular column may be dependent on the type of search supported by the particular column as defined when creating the semantic index and the corresponding index(es). For example, where a particular column is indexed to support only vector search, applying the search string to the particular column may include performing a vector search based on the search string. As another example, where the particular column is indexed to support only full-text search, applying the search string to the particular column may include performing a full-text search based on the search string. As a further example, where the particular column is indexed to support a hybrid search, applying the search string to the particular column may include performing both a vector search and a full-text search based on the search string and fusing the results of each search. In this example, fusion of vector search results and full-text search results may be automatically performed without additional user intervention so as to improve system utility and performance.

In some embodiments, applying the search string to the semantic index may include selecting a particular subset of responsive search results. The particular subset of responsive search results may be selected based on various parameters to the semantic search command, such as predicates or clauses of a relational database statement semantic search command. For example, in some embodiments, a top N number of search results may be selected. As another example, in some embodiments, the search results may be selected based on a ranking of search results that are ranked according to some defined ranking strategy.

As an illustrative example, consider the following syntax template for a relational database statement to perform a semantic search:

```
 SEMANTIC_SEARCH (TABLE = <object>, index_name
      COLUMN = (column_list)
      SEARCH_STRING = 'search_query'
      [, RERANKING_STRATEGY <reranker_strategy>]
      [, TOP_N = top_n]
      ] as <result_table_alias>
```

In this example syntax template, "object" is a placeholder for a table identifier, "column_list" is a placeholder for a listing of columns to be searched, and "search-query" is a placeholder for a search query to be applied to the listed columns. RERANKING_STRATEGY is an optional parameter for indicating, as "reranker_strategy," a particular reranking strategy to be applied to the search results. TOP_N is an optional parameter to define, as "top_n," a top number of results to return. "result_table_alias" is an alias for a table into which the search results are stored. Readers will appreciate that the example syntax template is merely illustrative and that a variety of syntaxes or formats may be used in a semantic search command. Moreover, readers will appreciate that additional information or parameters may be included in the semantic search command.

As is set forth above, a semantic search command may be included as a predicate of a relational database statement. Consider an example where a table for hotel reviews "HotelReviews" that has been indexed using a semantic index. Assume that a user wishes to know the top ten hotel reviews indicating that a particular hotel is good for families. The following relational database statement may be issued to search the HotelReviews table using a semantic search: "SELECT TOP 10 * FROM SEMANTIC_SEARCH('HotelReviews', `please recommend the best hotel for families') ORDER BY RANK." Readers will appreciate that, as semantic search can be performed using relational database statements, a query optimizer having full visibility of semantic search logic can identify the most efficient query plan for retrieving the desired result, further improving system utility and performance.

The approaches set forth above improve system utility and the user experience by enabling RAG through semantic search using single commands for generating a semantic index and performing a semantic search, respectively. This eases the onboarding process for enabling RAG, thereby more easily providing the LLM with more accurate and relevant output. Moreover, the approaches set forth above are computationally more efficient than existing approaches whereby vector indexes and full_text indexes are generated as independent processes.

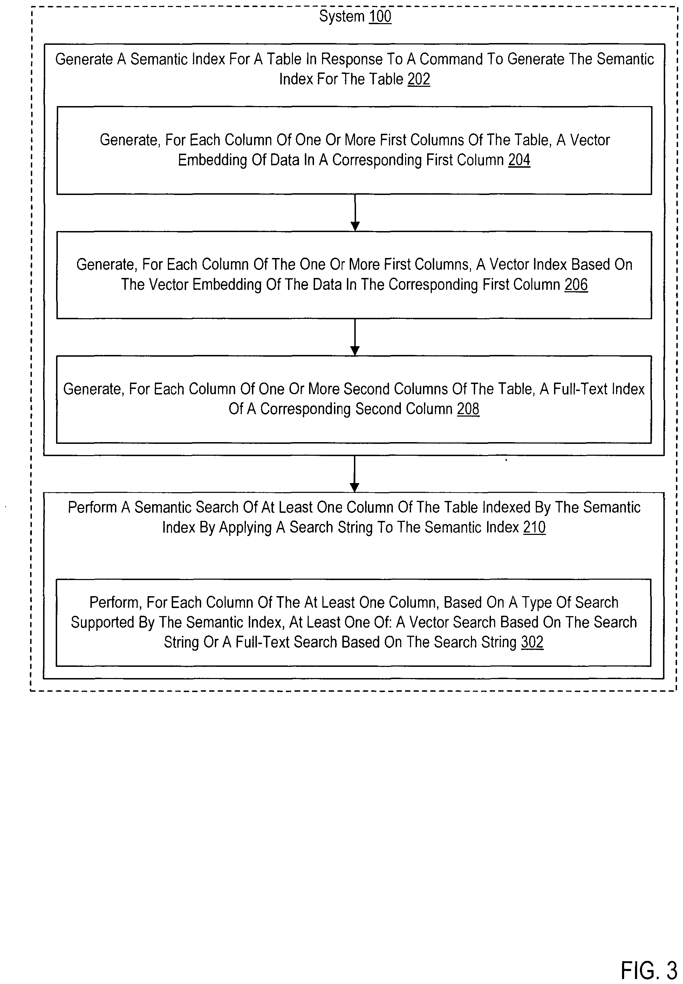

For further explanation, Fig. 3 sets forth a flowchart of another example method of semantic search for retrieval-augmented generation in accordance with some embodiments of the present disclosure. The method of Fig. 3 is similar to Fig. 2 in that the method of Fig. 3 also includes: generating 202 a semantic index for a table in response to a command to generate the semantic index for the table, including: generating 204, for each column of one or more first columns of the table, a vector embedding of data in a corresponding first column; generating 206, for each column of the one or more first columns, a vector index based on the vector embedding of the data in the corresponding first column; and generating 208, for each column of one or more second columns of the table, a full-text index of a corresponding second column; and performing 210 a semantic search of at least one column of the table indexed by the semantic index by applying a search string to the semantic index.

The method of Fig. 3 differs from Fig. 2 in that performing 210 a semantic search of at least one column of the table indexed by the semantic index by applying a search string to the semantic index includes performing 302, for each column of the at least one column, based on a type of search supported by the semantic index, at least one of: a vector search based on the search string or a full-text search based on the search string. As is set forth above, generating 202 the semantic index may include generating 202 the semantic index to support particular types of searches for one or more columns of a table to be indexed. In some embodiments, the particular types of searches to be supported for particular columns may be indicated in the command to generate the semantic index. For example, the command to generate the semantic index may indicate, for each column to be indexed, whether a given column will support a vector search, a full-text search, or a hybrid search that combines a vector search and a full-text search. Accordingly, in some embodiments, performing a semantic search of given column indexed by the semantic index using the search string may include performing the type(s) of search(es) supported for the given column by the semantic index using the search string.

In some embodiments, where a given column supports a vector search, performing a vector search of the given column using the search string may include generating a vector embedding of the search string. This may include, for example, providing the search string as input to an embedding model that provides, as output, the vector embedding of the search string. In some embodiments, this embedding model may include the same embedding model used to generate the vector embeddings and thereby the index for the given column as described above. This allows for the search string to be mapped to a multidimensional space consistent with the data of the given column when indexed.

In some embodiments, performing the vector search of the given column may then include identifying, using the vector index for the given column, one or more vector embeddings corresponding to the data of the given column nearest to the vector embedding of the search string. In some embodiments, these nearest vector embeddings may be calculated using a distance function such as Euclidean distance or another multidimensional distance calculation as can be appreciated. In some embodiments, the number of nearest vector embeddings may include a default number of nearest vector embeddings or a defined number of nearest vector embeddings included as a parameter of a semantic search command. In some embodiments, the one or more vector embeddings corresponding to the given column may include those vector embeddings generated as a function of the given column (e.g., vector embeddings of the data of the given column or of data chunks generated from the data of the given column). For example, the vector embedding of the search string may be used to search, using the vector index of the given column, vector embedding entries in a table of a vector database corresponding to the given column.

In some embodiments, performing the vector search of the given column may then include returning the data corresponding to the identified nearest vector embeddings. For example, in embodiments where a table of a vector database associates data or data chunks of the given column with their corresponding vector embeddings and this data or these data chunks are stored in the records of the table of the vector database, performing the vector search of the given column may include returning the data or data chunks stored in the table of the vector database for the identified nearest vector embeddings. In some embodiments, as will be described in further detail below, the table of the vector database may store, instead of data chunks associated with their corresponding vector embeddings, metadata identifying the data chunks in the data of the given column as stored in the table indexed by the semantic index. Accordingly, in some embodiments, performing the vector search of the given column may include accessing, from the data of the given column, the data chunks identified by the metadata corresponding to the identified nearest vector embeddings.

In some embodiments, where a given column supports a full-text search, performing a full-text search of the given column using the search string may include searching the data of the given column using any full-text search approach as can be appreciated. This may include, for example, searching the data of the given column based on keywords included in the search string, phrases included in the search string, or other text-based searches as can be appreciated. Performing the full-text search of the given column may then include providing the data of the given column responsive to the search string. In some embodiments, this may include ranking or scoring each entry of the data of the given column relative to the search string and providing some number of highest-ranked entries. This number may include, for example, a number of entries indicated as a parameter of the semantic search string.

In some embodiments, where a given column supports a hybrid search, performing a hybrid search of the given column may include performing a vector search and a full-text search of the given column using similar approaches as are set forth above. The results of the vector search and full-text search may then be merged or fused according to any approach as can be appreciated. In some embodiments, these fused results may be ranked according to a ranking or scoring algorithm, model, and the like. In some embodiments, the particular approach used for ranking the fused search results may be identified as a parameter of a semantic search command. In some embodiments, a number of top-ranked fused search results may be provided as a response to the hybrid search. This number may include, for example, a number of top-ranked fused search results indicated as a parameter of the semantic search string.

Readers will appreciate that the approaches set forth above allow for a semantic search of columns to be performed using the search approach(es) supported for that column when generating the semantic index. This may allow for a semantic search command to indicate one or more columns and a search string to be applied without specifically indicating the particular type of search(es) to be performed for each column, improving the user experience and overall system utility.

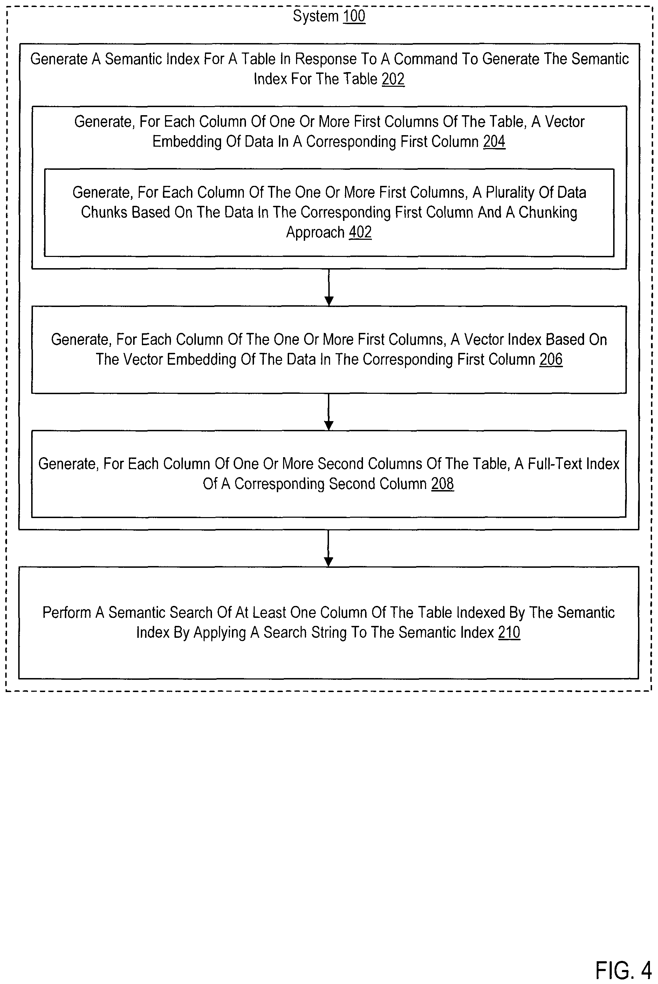

For further explanation, Fig. 4 sets forth a flowchart of another example method of semantic search for retrieval-augmented generation in accordance with some embodiments of the present disclosure. The method of Fig. 4 is similar to Fig. 2 in that the method of Fig. 4 also includes: generating 202 a semantic index for a table in response to a command to generate the semantic index for the table, including: generating 204, for each column of one or more first columns of the table, a vector embedding of data in a corresponding first column; generating 206, for each column of the one or more first columns, a vector index based on the vector embedding of the data in the corresponding first column; and generating 208, for each column of one or more second columns of the table, a full-text index of a corresponding second column; and performing 210 a semantic search of at least one column of the table indexed by the semantic index by applying a search string to the semantic index.

The method of Fig. 4 differs from Fig. 2 in that generating 204, for each column of one or more first columns of the table, the vector embedding of data in the corresponding first column includes generating 402, for each column of the one or more first columns, a plurality of data chunks based on the data in the corresponding first column and a chunking approach. In some embodiments, the vector embedding for data of a given column may include generating data chunks of the data in the given column by applying a chunking approach. For example, for a portion of data in a given column (e.g., for unstructured data stored as a value for the given column of a record of the table), that portion of data may be subdivided into multiple chunks based on the chunking approach. In some embodiments, the chunking approach may be defined in a command to generate the semantic index. In some embodiments, the chunking approach may be predefined based on various user-configurable parameters, may include a default chunking approach, may be based on a maximum input size for the language model, and the like.

In some embodiments, the chunking approach may include a degree of granularity for generating data chunks. In some embodiments, this may include a fixed number of characters or up to a fixed number of characters. In some embodiments, this may include different components of text data such as sentences, paragraphs, chapters, and the like such that each data chunk includes a particular sentence, paragraph, chapter, and the like. In some embodiments, the chunking approach may include an amount of characters, words, and the like that the data chunks may overlap with a preceding and/or succeeding data chunk. The chunking approach may include other attributes or parameters as can be appreciated. In some embodiments, these attributes or parameters may be indicated in the command to generate the semantic index.

In some embodiments, the plurality of data chunks may be identified in the data of the given column using a chunking approach and the data chunks may be stored as entries in a table of a vector database. For example, each entry of the vector database may associate a particular data chunk with its corresponding vector embedding. Thus, the data of a given data chunk may be duplicated in that the data of the given data chunk is stored both as an entry of the vector database and as a component of the data of the given column. In some embodiments, as will be described in further detail below, the table of the vector database may instead store, rather than the data chunks themselves, metadata used to identify particular chunks in the data from which those data chunks were identified using the chunking approach.

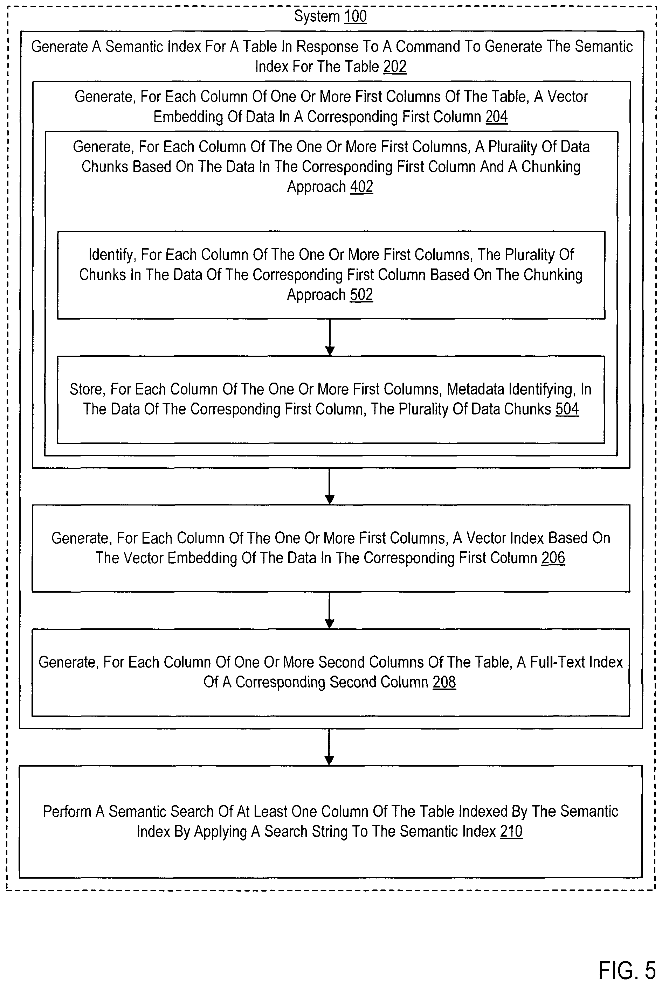

For further explanation, Fig. 5 sets forth a flowchart of another example method of semantic search for retrieval-augmented generation in accordance with some embodiments of the present disclosure. The method of Fig. 5 is similar to Fig. 4 in that the method of Fig. 5 also includes: generating 202 a semantic index for a table in response to a command to generate the semantic index for the table, including: generating 204, for each column of one or more first columns of the table, a vector embedding of data in a corresponding first column, including: generating 402, for each column of the one or more first columns, a plurality of data chunks based on the data in the corresponding first column and a chunking approach; generating 206, for each column of the one or more first columns, a vector index based on the vector embedding of the data in the corresponding first column; and generating 208, for each column of one or more second columns of the table, a full-text index of a corresponding second column; and performing 210 a semantic search of at least one column of the table indexed by the semantic index by applying a search string to the semantic index.

The method of Fig. 5 differs from Fig. 4 in that generating 402, for each column of the one or more first columns, the plurality of data chunks based on the data in the corresponding first column and a chunking approach also includes: identifying 502, for each column of the one or more columns, the plurality of chunks in the data of the corresponding first column based on the chunking approach. This may include identifying the plurality of chunks in a given column using the various attributes of the chunking approach as described above. As an example, in some embodiments, a particular chunk in a particular portion of data may be identified using an offset (e.g., a character offset) and a length (e.g., a character length). Thus, the particular chunk may be identified as a subset of the particular portion of data beginning from the offset and ending at the offset plus the length.

The method of Fig. 5 further differs from Fig. 4 in that generating 402, for each column of the one or more first columns, the plurality of data chunks based on the data in the corresponding first column and a chunking approach also includes storing 504, for each column of the one or more first columns, metadata identifying, in the data of the corresponding first column, the plurality of data chunks. For example, metadata may be created for each data chunk identified as described above that stores information identifying the corresponding data chunk (e.g., using an offset and length as described above). In some embodiments, metadata for each data chunk may be stored in association with the vector embedding of the data chunk. For example, each record in a table of a vector database may include, for a given data chunk, the metadata identifying the given data chunk and the vector embedding of the given data chunk.

Readers will appreciate that these approaches allow for vector embeddings to be associated with data chunks by storing metadata identifying data chunks, rather than storing the data chunks themselves, in association with their vector embedding. This reduces the overall amount of data stored compared to existing implementations where data chunks are stored in addition to the data from which those data chunks were identified, improving overall storage resource usage and performance. In other words, the approaches set forth herein avoid duplication of data caused by storing identified data chunks in internal tables in addition to storing the data from which those data chunks were identified in a source table.

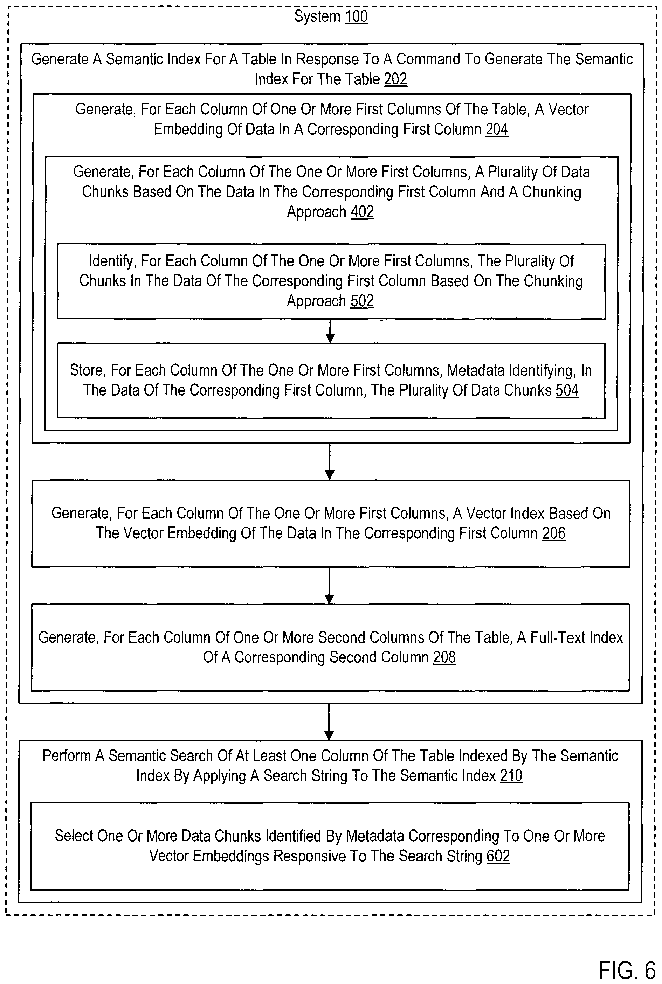

For further explanation, Fig. 6 sets forth a flowchart of another example method of semantic search for retrieval-augmented generation in accordance with some embodiments of the present disclosure. The method of Fig. 6 is similar to Fig. 5 in that the method of Fig. 6 also includes: generating 202 a semantic index for a table in response to a command to generate the semantic index for the table, including: generating 204, for each column of one or more first columns of the table, a vector embedding of data in a corresponding first column, including: generating 402, for each column of the one or more first columns, a plurality of data chunks based on the data in the corresponding first column and a chunking approach, including: identifying 502, for each column of the one or more columns, the plurality of chunks in the data of the corresponding first column based on the chunking approach; and storing 504, for each column of the one or more first columns, metadata identifying, in the data of the corresponding first column, the plurality of data chunks; generating 206, for each column of the one or more first columns, a vector index based on the vector embedding of the data in the corresponding first column; and generating 208, for each column of one or more second columns of the table, a full-text index of a corresponding second column; and performing 210 a semantic search of at least one column of the table indexed by the semantic index by applying a search string to the semantic index.

The method of Fig. 6 differs from Fig. 5 in that performing 210 a semantic search of at least one column of the table indexed by the semantic index by applying a search string to the semantic also includes selecting 602 one or more data chunks identified by metadata corresponding to one or more vector embeddings responsive to the search string. In some embodiments, the one or more vector embeddings responsive to the search string may include one or more vector embeddings nearest to a vector embedding of the search string identified as described above. These one or more vector embeddings may be associated with metadata identifying their corresponding data chunks. Accordingly, these corresponding data chunks may be selected (e.g., extracted or encoded) from the data from which they were generated using the metadata. Thus, data chunks may be selected for a semantic search using metadata rather than require the data chunks to be separately stored as in some existing implementations, reducing overall storage space usage and improving system utility and performance.

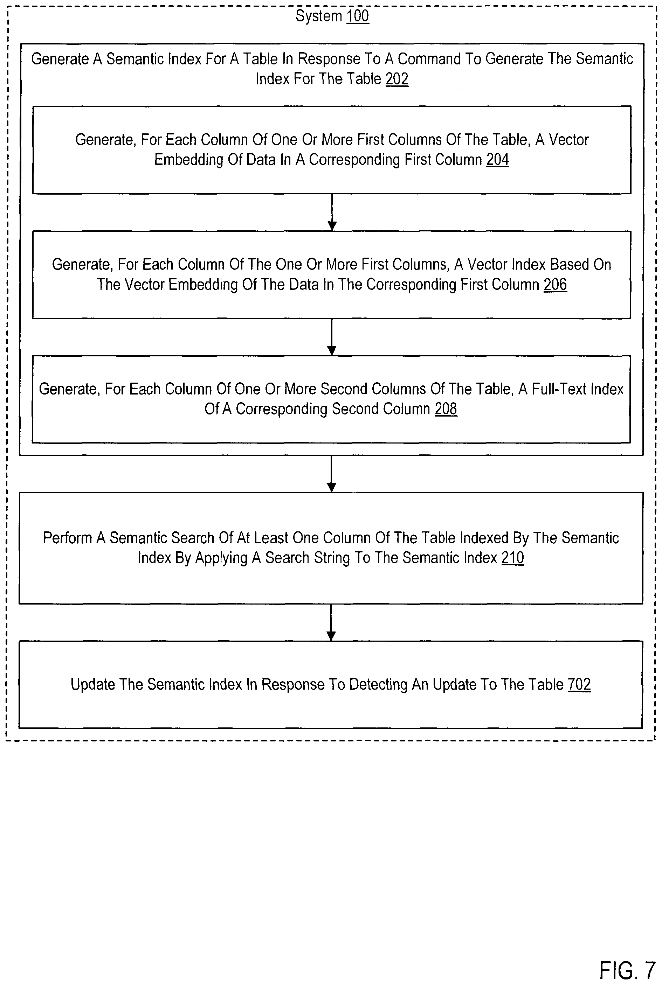

For further explanation, Fig. 7 sets forth a flowchart of another example method of semantic search for retrieval-augmented generation in accordance with some embodiments of the present disclosure. The method of Fig. 7 is similar to Fig. 2 in that the method of Fig. 7 also includes: generating 202 a semantic index for a table in response to a command to generate the semantic index for the table, including: generating 204, for each column of one or more first columns of the table, a vector embedding of data in a corresponding first column; generating 206, for each column of the one or more first columns, a vector index based on the vector embedding of the data in the corresponding first column; and generating 208, for each column of one or more second columns of the table, a full-text index of a corresponding second column; and performing 210 a semantic search of at least one column of the table indexed by the semantic index by applying a search string to the semantic index.

The method of Fig. 7 differs from Fig. 2 in that the method of Fig. 7 also includes updating 702 the semantic index in response to detecting an update to the table. In some embodiments, the update to the table may include one or more records being added to the table. In some embodiments, the update to the table may include one or more records being modified. For example, in some embodiments, a process or service may crawl or otherwise monitor the table to detect updates to the table. In some embodiments, this may be performed synchronously or, for performance consideration, asynchronously.

As the table has been updated, the semantic index should be updated to reflect the update to the table. For example, for some amount of new data to be indexed (e.g., newly added or updated data), this data may be automatically chunked into data chunks, its vector embeddings may be automatically generated, its data chunks or corresponding metadata may be stored in vector database tables in association with the vector embeddings, and the like. The semantic index may then be automatically updated to reflect the updated table.

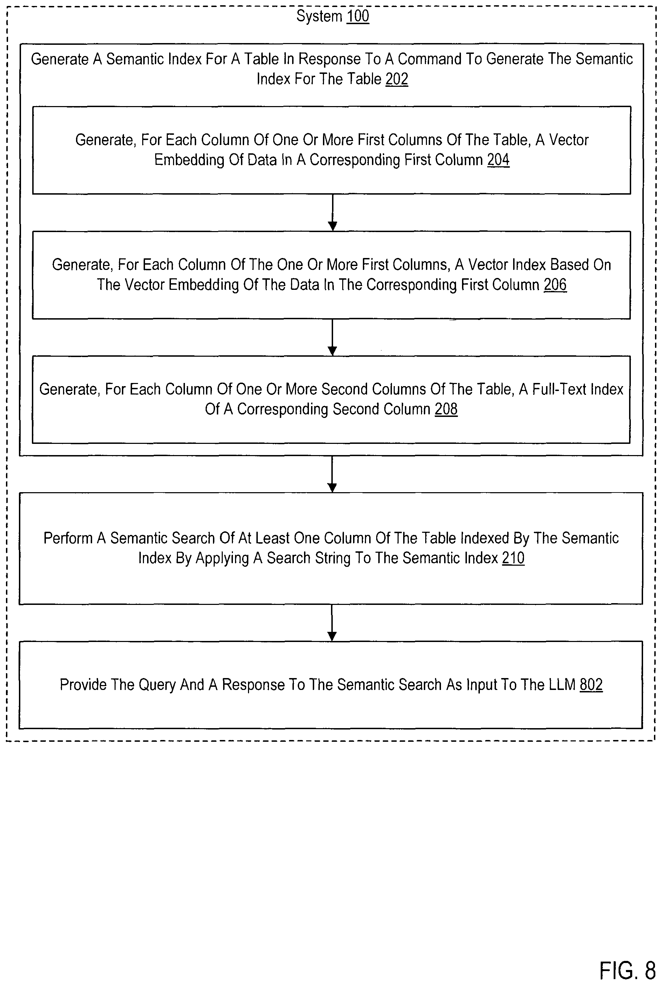

For further explanation, Fig. 8 sets forth a flowchart of another example method of semantic search for retrieval-augmented generation in accordance with some embodiments of the present disclosure. The method of Fig. 8 is similar to Fig. 2 in that the method of Fig. 8 also includes: generating 202 a semantic index for a table in response to a command to generate the semantic index for the table, including: generating 204, for each column of one or more first columns of the table, a vector embedding of data in a corresponding first column; generating 206, for each column of the one or more first columns, a vector index based on the vector embedding of the data in the corresponding first column; and generating 208, for each column of one or more second columns of the table, a full-text index of a corresponding second column; and performing 210 a semantic search of at least one column of the table indexed by the semantic index by applying a search string to the semantic index.

The method of Fig. 8 differs from Fig. 2 in that the method of Fig. 8 also includes providing 802 the query and a response to the semantic search as input to the LLM. As is set forth above, in some embodiments, the search string may correspond to a query to an LLM. For example, the query may include a request for the LLM to generate some content, answer some question, gather some information, and the like. This query may then be used as a search string for the semantic search such that the data returned in response to the semantic search is relevant or related to the query.

The response to the semantic search may then be provided 802 with the query as input to the LLM and used as additional contextual information for the LLM to process the query. As an example, the table searched using the semantic search may include new or updated information beyond that which was used to train the LLM. By selecting relevant portions of this information for use as contextual information for the LLM, the LLM is provided with an expanded and more relevant scope of knowledge for processing the query. This may allow for the LLM to generate more accurate and relevant output for the query, improving overall utility of the LLM.

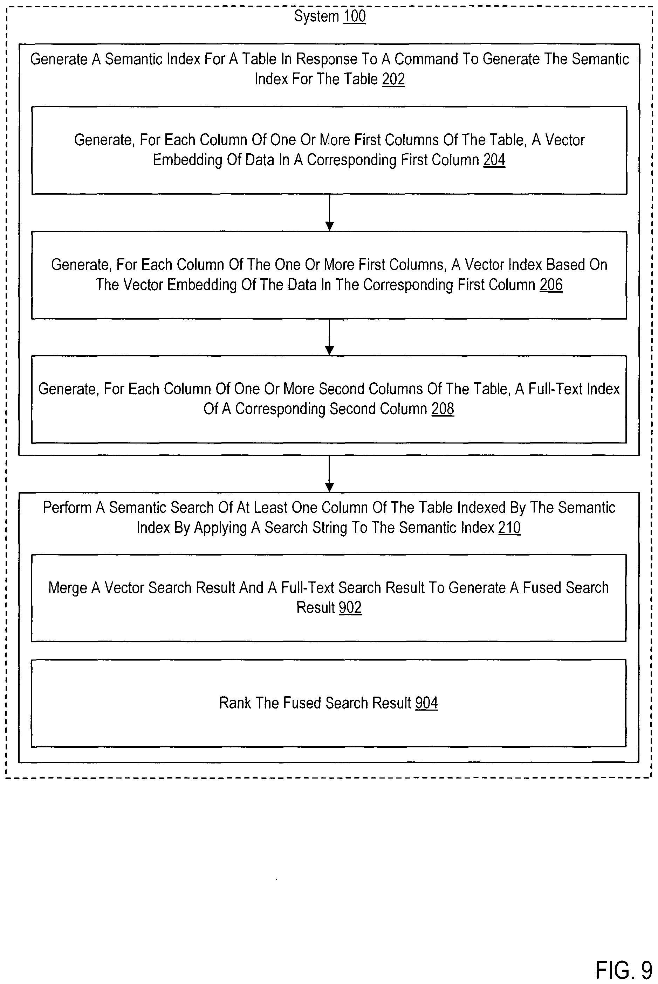

For further explanation, Fig. 9 sets forth a flowchart of another example method of semantic search for retrieval-augmented generation in accordance with some embodiments of the present disclosure. The method of Fig. 9 is similar to Fig. 2 in that the method of Fig. 9 also includes: generating 202 a semantic index for a table in response to a command to generate the semantic index for the table, including: generating 204, for each column of one or more first columns of the table, a vector embedding of data in a corresponding first column; generating 206, for each column of the one or more first columns, a vector index based on the vector embedding of the data in the corresponding first column; and generating 208, for each column of one or more second columns of the table, a full-text index of a corresponding second column; and performing 210 a semantic search of at least one column of the table indexed by the semantic index by applying a search string to the semantic index.

The method of Fig. 9 differs from Fig. 2 in that performing 210 a semantic search of at least one column of the table indexed by the semantic index by applying a search string to the semantic index also includes merging 902 a vector search result and a full-text search result to generate a fused search result. For example, assume that a given column to be searched supports a hybrid search. Accordingly, a semantic search of the given column may include a vector search and a full-text search of the given column, producing a vector search result responsive to the vector search and a full-text search result responsive to the full-text search. These search result data sets may be fused into a combined data set (e.g., a fused search result) using any approach as can be appreciated for fusing search result data sets.

The method of Fig. 9 further differs from Fig. 2 in that performing 210 a semantic search of at least one column of the table indexed by the semantic index by applying a search string to the semantic index also includes ranking 904 the fused search result. In some embodiments, these fused results may be ranked according to a ranking or scoring algorithm, model, and the like. In some embodiments, the particular approach used for ranking the fused search result may be identified as a parameter of a semantic search command. In some embodiments, a number of top-ranked fused search results may be provided as a response to the hybrid search. This number may include, for example, a number of top-ranked fused search results indicated as a parameter of the semantic search string.

Readers will appreciate that, although the following discussion describes generating semantic indexes and performing semantic searches for use in RAG, these approaches may also be used for other operations. For example, semantic indexes and search may also be used for other database search operations outside of RAG.

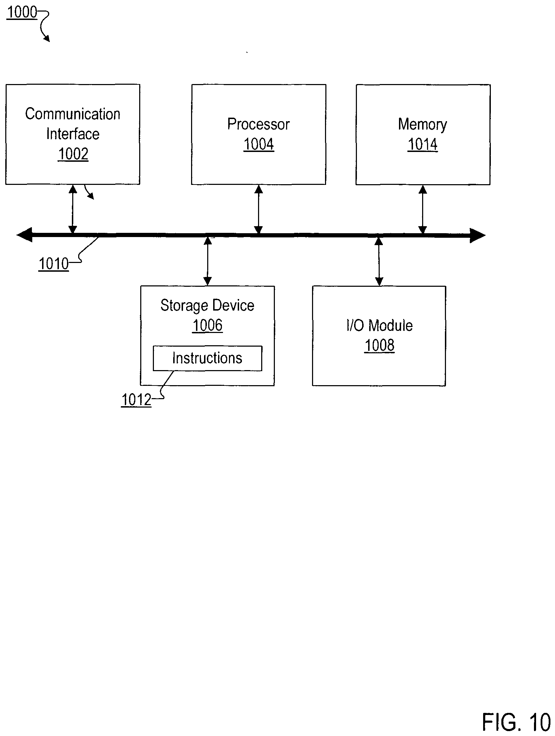

For further explanation and as an additional example of a supporting technology for performing the actions described above, Fig. 10 illustrates an exemplary computing device 1000 that may be specifically configured to perform one or more of the processes described herein. As shown in Fig. 10, computing device 1000 may include a communication interface 1002, a processor 1004, a storage device 1006, an input/output (I/O) module 1008, and computer memory 1014 communicatively connected one to another via a communication infrastructure 1010. While an exemplary computing device 1000 is shown in Fig. 10, the components illustrated in Fig. 10 are not intended to be limiting. Additional or alternative components may be used in other embodiments. Components of computing device 1000 shown in Fig. 10 will now be described in additional detail.

Communication interface 1002 may be configured to communicate with one or more computing devices. Examples of communication interface 1002 include, without limitation, a wired network interface (such as a network interface card), a wireless network interface (such as a wireless network interface card), a modem, an audio/video connection, and any other suitable interface.

Processor 1004 generally represents any type or form of processing unit capable of processing data and/or interpreting, executing, and/or directing execution of one or more of the instructions, processes, and/or operations described herein. Processor 1004 may perform operations by executing computer-executable instructions 1012 (e.g., an application, software, code, and/or other executable data instance) stored in storage device 1006.

Storage device 1006 may include one or more data storage media, devices, or configurations and may employ any type, form, and combination of data storage media and/or device. For example, storage device 1006 may include, but is not limited to, any combination of non-volatile media and/or volatile media. Electronic data, including data described herein, may be temporarily and/or permanently stored in storage device 1006. For example, data representative of computer-executable instructions 1012 configured to direct processor 1004 to perform any of the operations described herein may be stored within storage device 1006. In some examples, data may be arranged in one or more databases residing within storage device 1006.

I/O module 1008 may include one or more I/O modules configured to receive user input and provide user output. I/O module 1008 may include any hardware, firmware, software, or combination thereof supportive of input and output capabilities. For example, I/O module 1008 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 1008 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 1008 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 1000.

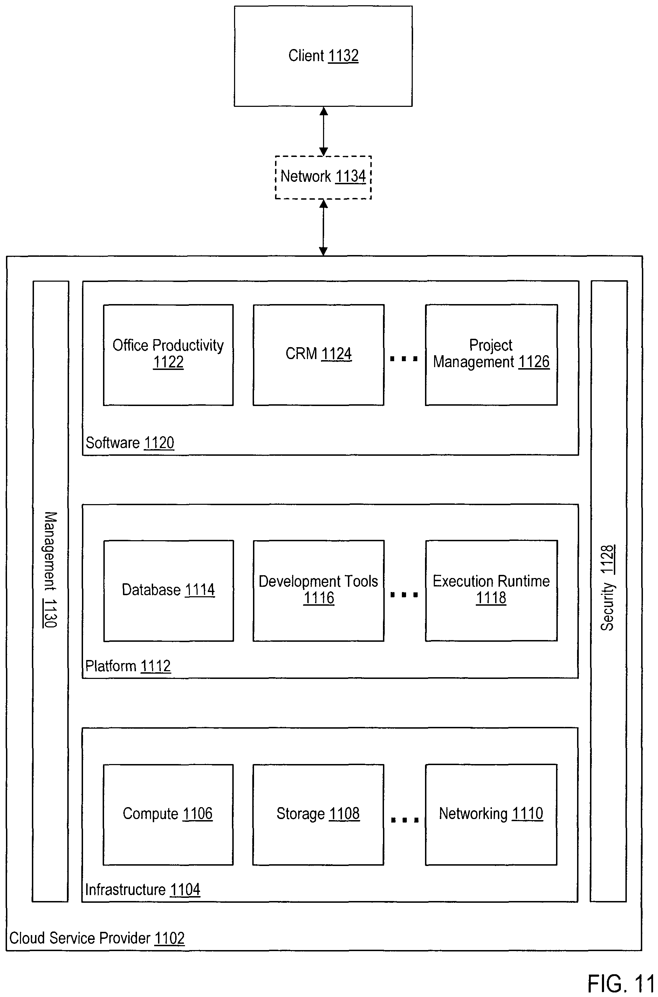

For further explanation and as an additional example of a supporting technology for performing the actions described above, Fig. 11 sets forth a block diagram of a cloud service provider service architecture in accordance with some embodiments. The cloud service provider can deliver a variety resources through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others.

Fig. 11 depicts an embodiment where software 1120 is delivered as a service. Software-as-a-service (`SaaS') is a model where software applications are delivered over the internet as-a-service. Rather than installing and maintaining software locally, users can access software via a web browser or other network connected interface, eliminating the need for complex software and hardware management on the client-side. In Fig. 11, as examples of software 1120 that can be delivered as-a-service, the illustrated embodiment includes office productivity 1122 software, customer relationship management (`CRM') 1124 software, and project management 1126 software. The office productivity 1122 software can include applications designed to facilitate common business and personal tasks, including word processing applications, applications for spreadsheet creation, presentation design applications, and many others. The CRM 1124 software can include applications for managing a business organization's relationships and interactions with customers and potential customers. The project management 1126 software can include applications designed to help teams plan, organize, and manage projects efficiently by facilitating collaboration and tracking the progress of projects. Readers will appreciate that in other embodiments, other types of software may be delivered using a SaaS model.

Fig. 11 depicts an embodiment where platforms 1112 can be delivered as a service. Platform-as-a-service (`PaaS') is a model that provides cloud customers with platform resources that they can use to develop, run, and manage applications without the complexity of such deploying and managing such infrastructure on their own. In Fig. 11, as examples of platform 1112 resources that can be delivered as-a-service, the illustrated embodiment includes database 1114 services, development tools 1116 services, and execution runtime 1118 services. The database 1114 services can be used to provide access to databases without management overhead for the user as the cloud service provider manages the provisioning, scaling, and maintenance of the databases. The development tools 1116 services can provide developers with tools to design, develop, test, and deploy applications without needing to manage the underlying infrastructure. The execution runtime 1118 services can provide environments where applications or other forms of computer program code can be executed, including services to scale the execution environment. Readers will appreciate that in other embodiments, other platform resources may be delivered using a PaaS model.

Fig. 11 depicts an embodiment where infrastructure 1104 can be delivered as a service. Infrastructure-as-a-Service (`IaaS') is a model that provides virtualized computing resources over the internet, such that infrastructure such as servers, storage, networks, and others may be leased on demand rather than purchasing and maintaining physical hardware. In Fig. 11, as examples of infrastructure 1104 resources that can be delivered as-a-service, the illustrated embodiment includes compute 1106 services, storage 1108 services, and networking 1110 services. The compute 1106 services can be used to provide on-demand access to computational resources such as VMs, containers, and serverless functions, where the cloud service provider manages the provisioning, scaling, and maintenance of such resources. The storage 1108 services can provide storage resources that can be used to store and access data, without the need for customers to purchase and manage on-premises physical storage resources. The networking 1110 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider of Fig. 11 also provides management 1130 resources. The management 1130 resources can include, for example, tools and interfaces that enable customers to efficiently deploy, monitor, and manage, their cloud services. Such tools can include web-based management consoles, command-line interfaces (`CLIs'), APIs, automation tools, and other tools.

The cloud service provider of Fig. 11 also provides security 1128 resources. The security 1128 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider. For example, the virtual machines, containers, and pods described above may all be delivered via a cloud service provider. In other embodiments, other forms of compute resources may be used in place of the virtual machines or other compute resource. For example, AWS EC2 instances or other form of cloud compute instances may be utilized in place of the virtual machines.

Advantages and features of the present disclosure can be further described by the following statements:
1. A method, comprising: generating a semantic index for a table in response to a command to generate the semantic index for the table, wherein generating the semantic index comprises: generating, for each column of one or more first columns of the table, a vector embedding of data in a corresponding first column; generating, for each column of the one or more first columns, a vector index based on the vector embedding of the data in the corresponding first column; and generating, for each column of one or more second columns of the table, a full-text index of a corresponding second column, wherein the semantic index comprises the vector index of each column of the one or more first columns and the full-text index of each column of the one or more second columns; and performing a semantic search of at least one column of the table indexed by the semantic index by applying a search string to the semantic index, wherein the search string corresponds to a query to a language model (LM).
2. The method of statement 1, wherein performing the semantic search of the at least one column comprises performing, for each column of the at least one column, based on a type of search supported by the semantic index, at least one of: a vector search based on the search string or a full-text search based on the search string.
3. The method of statements 1 or 2, wherein generating, for each column of the one or more first columns of the table, the vector embedding of data in the corresponding first column comprises generating, for each column of the one or more first columns, a plurality of data chunks based on the data in the corresponding first column and a chunking approach.
4. The method of any combination of statements 1-3, wherein generating, for each column of the one or more first columns, the plurality of data chunks comprises: identifying, for each column of the one or more first columns, the plurality of chunks in the data of the corresponding first column based on the chunking approach; and storing, for each column of the one or more first columns, metadata identifying, in the data of the corresponding first column, the plurality of data chunks.
5. The method of any combination of statements 1-4, wherein performing a semantic search of at least one column of the table indexed by the semantic index by applying a search string to the semantic index further comprises selecting one or more data chunks identified by metadata corresponding to one or more vector embeddings responsive to the search string.
6. The method of any combination of statements 1-5, further comprising updating the semantic index in response to detecting an update to the table.
7. The method of any combination of statements 1-6, further comprising providing the query and a response to the semantic search as input to the LM.
8. The method of any combination of statements 1-7, wherein the command to generate the semantic index comprises a relational database statement and the search string is included in another relational database statement.
9. The method of any combination of statements 1-8, wherein performing the semantic search comprises: merging a vector search result and a full-text search result to generate a fused search result; and ranking the fused search result.
10. An apparatus, comprising: a memory; and one or more processing devices, operatively coupled to the memory, the one or more processing devices configured to: generating a semantic index for a table in response to a command to generate the semantic index for the table, wherein generating the semantic index comprises: generating, for each column of one or more first columns of the table, a vector embedding of data in a corresponding first column; generating, for each column of the one or more first columns, a vector index based on the vector embedding of the data in the corresponding first column; and generating, for each column of one or more second columns of the table, a full-text index of a corresponding second column, wherein the semantic index comprises the vector index of each column of the one or more first columns and the full-text index of each column of the one or more second columns; and performing a semantic search of at least one column of the table indexed by the semantic index by applying a search string to the semantic index, wherein the search string corresponds to a query to a language model (LM).
11. The apparatus of statement 10, wherein, to perform the semantic search of the at least one column, the one or more processing devices are further configured to perform, for each column of the at least one column, based on a type of search supported by the semantic index, at least one of: a vector search based on the search string or a full-text search based on the search string.
12. The apparatus of statements 10 or 11, wherein, to generate, for each column of the one or more first columns of the table, the vector embedding of data in the corresponding first column, the one or more processing devices are further configured to generate, for each column of the one or more first columns, a plurality of data chunks based on the data in the corresponding first column and a chunking approach.
13. The apparatus of any combination of statements 10-12, wherein, to generate, for each column of the one or more first columns, the plurality of data chunks, the one or more processing devices are further configured to: identify, for each column of the one or more first columns, the plurality of chunks in the data of the corresponding first column based on the chunking approach; and store, for each column of the one or more first columns, metadata identifying, in the data of the corresponding first column, the plurality of data chunks.
14. The apparatus of any combination of statements 10-13, wherein, to perform a semantic search of at least one column of the table indexed by the semantic index by applying the search string to the semantic index, the one or more processing devices are further configured to select one or more data chunks identified by metadata corresponding to one or more vector embeddings responsive to the search string.
15. The apparatus of any combination of statements 10-14, wherein the one or more processing devices are further configured to provide the query and a response to the semantic search as input to the LM.
16. The apparatus of any combination of statements 10-15, wherein the command to generate the semantic index comprises a relational database statement and the search string is included in another relational database statement.
17. The apparatus of any combination of statements 10-16, wherein the one or more processing devices are further configured to update the semantic index in response to detecting an update to the table.
18. The apparatus of any combination of statements 10-17, wherein, to perform a semantic search of at least one column of the table indexed by the semantic index by applying the search string to the semantic index, the one or more processing devices are further configured to: merge a vector search result and a full-text search result to generate a fused search result; and rank the fused search result.
19. A non-transitory computer readable storage medium storing instructions which, when executed, cause a processing device to: generating a semantic index for a table in response to a command to generate the semantic index for the table, wherein generating the semantic index comprises: generating, for each column of one or more first columns of the table, a vector embedding of data in a corresponding first column; generating, for each column of the one or more first columns, a vector index based on the vector embedding of the data in the corresponding first column; and generating, for each column of one or more second columns of the table, a full-text index of a corresponding second column, wherein the semantic index comprises the vector index of each column of the one or more first columns and the full-text index of each column of the one or more second columns; and performing a semantic search of at least one column of the table indexed by the semantic index by applying a search string to the semantic index, wherein the search string corresponds to a query to a language model (LM).
20. The non-transitory computer readable storage medium of statement 19, wherein, to perform the semantic search of the at least one column, the instructions, when executed, cause the processing device to perform, for each column of the at least one column, based on a type of search supported by the semantic index, at least one of: a vector search based on the search string or a full-text search based on the search string.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of semantic search for retrieval-augmented generation, comprising:
generating a semantic index for a table in response to a command to generate the semantic index for the table, wherein generating the semantic index comprises:
generating, for each column of one or more first columns of the table, a vector embedding of data in a corresponding first column;
generating, for each column of the one or more first columns, a vector index based on the vector embedding of the data in the corresponding first column; and
generating, for each column of one or more second columns of the table, a full-text index of a corresponding second column, wherein the semantic index comprises the vector index of each column of the one or more first columns and the full-text index of each column of the one or more second columns; and
performing a semantic search of at least one column of the table indexed by the semantic index by applying a search string to the semantic index, wherein the search string corresponds to a query to a language model (LM).

2. The method of claim 1, wherein performing the semantic search of the at least one column comprises performing, for each column of the at least one column, based on a type of search supported by the semantic index, at least one of: a vector search based on the search string or a full-text search based on the search string.

3. The method of claim 1, wherein generating, for each column of the one or more first columns of the table, the vector embedding of data in the corresponding first column comprises generating, for each column of the one or more first columns, a plurality of data chunks based on the data in the corresponding first column and a chunking approach.

4. The method of claim 3, wherein generating, for each column of the one or more first columns, the plurality of data chunks comprises:
identifying, for each column of the one or more first columns, the plurality of chunks in the data of the corresponding first column based on the chunking approach; and
storing, for each column of the one or more first columns, metadata identifying, in the data of the corresponding first column, the plurality of data chunks.

5. The method of claim 4, wherein performing a semantic search of at least one column of the table indexed by the semantic index by applying a search string to the semantic index further comprises selecting one or more data chunks identified by metadata corresponding to one or more vector embeddings responsive to the search string.

6. The method of claim 1, further comprising updating the semantic index in response to detecting an update to the table.

7. The method of claim 1, further comprising providing the query and a response to the semantic search as input to the LM.

8. The method of claim 1, wherein the command to generate the semantic index comprises a relational database statement and the search string is included in another relational database statement.

9. The method of claim 1, wherein performing the semantic search comprises:
merging a vector search result and a full-text search result to generate a fused search result; and
ranking the fused search result.

10. An apparatus for semantic search for retrieval-augmented generation, comprising:
a memory; and
one or more processing devices, operatively coupled to the memory, the one or more processing devices configured to:
generating a semantic index for a table in response to a command to generate the semantic index for the table, wherein generating the semantic index comprises:
generating, for each column of one or more first columns of the table, a vector embedding of data in a corresponding first column;
generating, for each column of the one or more first columns, a vector index based on the vector embedding of the data in the corresponding first column; and
generating, for each column of one or more second columns of the table, a full-text index of a corresponding second column, wherein the semantic index comprises the vector index of each column of the one or more first columns and the full-text index of each column of the one or more second columns; and
performing a semantic search of at least one column of the table indexed by the semantic index by applying a search string to the semantic index, wherein the search string corresponds to a query to a language model (LM).

11. The apparatus of claim 10, wherein, to perform the semantic search of the at least one column, the one or more processing devices are further configured to perform, for each column of the at least one column, based on a type of search supported by the semantic index, at least one of: a vector search based on the search string or a full-text search based on the search string.

12. The apparatus of claim 10, wherein, to generate, for each column of the one or more first columns of the table, the vector embedding of data in the corresponding first column, the one or more processing devices are further configured to generate, for each column of the one or more first columns, a plurality of data chunks based on the data in the corresponding first column and a chunking approach.

13. The apparatus of claim 12, wherein, to generate, for each column of the one or more first columns, the plurality of data chunks, the one or more processing devices are further configured to:
identify, for each column of the one or more first columns, the plurality of chunks in the data of the corresponding first column based on the chunking approach; and
store, for each column of the one or more first columns, metadata identifying, in the data of the corresponding first column, the plurality of data chunks.

14. The apparatus of claim 13, wherein, to perform a semantic search of at least one column of the table indexed by the semantic index by applying the search string to the semantic index, the one or more processing devices are further configured to select one or more data chunks identified by metadata corresponding to one or more vector embeddings responsive to the search string.

15. A non-transitory computer readable storage medium for semantic search for retrieval-augmented generation, the non-transitory computer readable storage medium storing instructions which, when executed, cause a processing device to perform the method of any of claims 1-9.
